# EUROPEAN PATENT SPECIFICATION

(11) **EP 3 447 825 B1**
(45) Date of publication and mention of the grant of the patent: **14.06.2023**
(21) Application number: 17209927.7
(22) Date of filing: 22.12.2017
(51) Int. Cl.: H01M 50/70, H01M 10/12, H01M 10/42

(54) **ELECTROLYTE MIXING APPARATUS FOR BATTERY CAPABLE OF INCREASING FLOW VELOCITY OF ELECTROLYTE**
ELEKTROLYTMISCHVORRICHTUNG FÜR BATTERIE, DIE ZUR ERHÖHUNG DER STRÖMUNGSGESCHWINDIGKEIT VON ELEKTROLYTEN IN DER LAGE IST
APPAREIL DE MÉLANGE D'ÉLECTROLYTE POUR BATTERIE CAPABLE D'AUGMENTER LA VITESSE D'ÉCOULEMENT D'ÉLECTROLYTE

(30) Priority: 23.08.2017 KR 20170106834
(43) Date of publication of application: 27.02.2019
(73) Proprietor: Global Battery Co., Ltd., Seoul 06212 (KR)
(72) Inventor: Park, Seung Bok, 62256 Gwangju (KR); Kim, Hyuin Ryung, 62250 Gwangju (KR); Kim, Jin Hyun, 55021 Jeonju-si, Jeollabuk-do (KR)
(74) Representative: Gulde & Partner

(56) References cited:
- EP-A1- 0 417 186
- EP-A1- 2 660 894
- EP-B1- 0 417 186
- US-A1- 2013 202 949

## Description

### BACKGROUND OF THE INVENTION

### Field of the Invention

The present invention generally relates to an electrolyte mixing apparatus for a battery capable of increasing a flow velocity of an electrolyte.

### Description of the Related Art

A battery is a device generating an electromotive force by an internal chemical action. A battery is capable of being repeatedly charged and discharged, and therefore, it is generally called a secondary battery.

As it is well known, in a battery, a positive electrode is composed of lead dioxide (PbO2), a negative electrode is composed of spongy lead (Pb), and an electrolyte is a diluted sulfuric acid (H2SO4).

Such a battery makes current flow using a potential difference between the positive electrode and the negative electrode, each one consisting of the lead dioxide and the lead respectively, whereby power is generated for operating a load. Here, a casing of the battery is filled with the electrolyte and a surface of the filled electrolyte is higher than upper ends of pole plates fixed in the casing of the battery.

As a certain time passes after the electrolyte has been supplied into the casing, during repeated uses of charging and discharging of battery, electrolyte stratification occurs wherein the electrolyte becomes layered according to specific gravity so that lower specific gravity electrolyte is disposed at an upper layer while higher specific gravity electrolyte sinks and is disposed at a bottom layer.

Such conventional electrolyte stratification means a separation of the electrolyte into multiple layers according to specific gravities thereof. This is a general phenomenon caused by a difference in specific gravities under no convection state.

However, a pole plate group restricts a flow of the electrolyte so that upper and lower portions of the electrolyte cannot be mixed smoothly with each other, thereby the electrolyte stratification occurs. That is, in the conventional battery, the electrolyte stratification makes the lower specific gravity electrolyte be disposed at the upper portion of the pole plate assembly, thereby corrosion of the upper portion of the pole plates is accelerated since the sulfuric acid solution of the lower specific gravity electrolyte has a relatively low concentration.

Furthermore, in the conventional battery, since the higher specific gravity electrolyte is disposed at the lower portion of the battery where the pole plate assembly is provided, a terminal voltage of the battery may be indicated higher than an actual degree of charge. Such overvoltage may cause insufficient charge in a typical charging method of vehicles or other machines in which charge voltage is adjusted to a predetermined voltage. Moreover, continuous use of the battery in the insufficient charging state also accelerates sulfation of the pole plates, thus reducing the lifetime of the battery.

An apparatus for mixing higher specific gravity electrolyte and lower specific gravity electrolyte according to a flow of an electrolyte in a battery is provided in the related art. However, in a case of heavy vehicles (for example, heavy buses or heavy trucks), such a conventional apparatus for mixing an electrolyte in a battery has large amount of the electrolyte therein, thus the electrolyte should be mixed in a short period of time.

However, the conventional apparatus for mixing an electrolyte in a battery has a problem with time of mixing the higher specific gravity electrolyte and the lower specific gravity electrolyte, for example, in case of the conventional apparatus is applied to such a large capacity battery, since a flow of an electrolyte up and down takes a long time.

### Documents of Related Art

(Patent Document 1) Korean Patent Application Publication No. 10-2013-0122063 (2013.11.07);
(Patent Document 2) Korean Patent Application Publication No. 10-2017-0051036 (2017.05.11); and
(Patent Document 3) U. S Patent No. 5,032,476 (1991.07.16).

Furthermore, EP 2 660 894 A1 discloses mixing electrolyte of batteries.

### SUMMARY OF THE INVENTION

Accordingly, the present invention has been made keeping in mind the above problems occurring in the related art, and the present invention is intended to provide an electrolyte mixing
apparatus for a battery capable of increasing a flow velocity of an electrolyte which is configured to increase a flow velocity of an electrolyte separated into higher specific gravity electrolyte and lower specific gravity electrolyte so as to mix the higher specific gravity electrolyte and the lower specific gravity electrolyte in a short period of time.

In addition, the present invention is intended to provide an electrolyte mixing apparatus for a battery capable of increasing a flow velocity of an electrolyte which is configured to efficiently mix higher specific gravity electrolyte and lower specific gravity electrolyte in a large capacity battery applied to heavy vehicles (buses or trucks).

In order to achieve the above objects, the present invention provides the electrolyte mixing apparatus for a battery of claim 1, as well as exemplary embodiments described hereinbelow.

According to an exemplary embodiment of the present invention, there is provided an electrolyte mixing apparatus for a battery capable of increasing a flow velocity of an electrolyte, the apparatus including,: a guide plate provided between an inner wall surface of a battery casing and a pole plate assembly so as to provide a passage to deliver the higher specific gravity electrolyte upwards by inertia, and to deliver downwards a mixed electrolyte provided at an upper portion; and at least one mixing container mixing the higher specific gravity electrolyte, introduced through the passage provided on the guide plate, with the lower specific gravity electrolyte introduced into the upper portion, and discharging the mixed electrolyte, according to a direction of inertia, wherein the mixing container includes: a receiving portion providing a space in a top portion of the guide plate for mixing the lower specific gravity electrolyte with the higher specific gravity electrolyte, and providing an inlet/outlet groove for introducing the lower specific gravity electrolyte and discharging the mixed electrolyte according to a direction of inertia; and a labyrinth portion having at least one circulation path, wherein an outlet of the circulation path is narrower than an
apparatus for a battery capable of increasing a flow velocity of an electrolyte which is configured to increase a flow velocity of an electrolyte separated into higher specific gravity electrolyte and lower specific gravity electrolyte so as to mix the higher specific gravity electrolyte and the lower specific gravity electrolyte in a short period of time.

In addition, the present invention is intended to provide an electrolyte mixing apparatus for a battery capable of increasing a flow velocity of an electrolyte which is configured to efficiently mix higher specific gravity electrolyte and lower specific gravity electrolyte in a large capacity battery applied to heavy vehicles (buses or trucks).

In order to achieve the above objects, the present invention provides exemplary embodiments described hereinbelow.

According to an exemplary embodiment of the present invention, there is provided an electrolyte mixing apparatus for a battery capable of increasing a flow velocity of an electrolyte, the apparatus including,: a guide plate provided between an inner wall surface of a battery casing and a pole plate assembly so as to provide a passage to deliver the higher specific gravity electrolyte upwards by inertia, and to deliver downwards a mixed electrolyte provided at an upper portion; and at least one mixing container mixing the higher specific gravity electrolyte, introduced through the passage provided on the guide plate, with the lower specific gravity electrolyte introduced into the upper portion, and discharging the mixed electrolyte, according to a direction of inertia, wherein the mixing container includes: a receiving portion providing a space in a top portion of the guide plate for mixing the lower specific gravity electrolyte with the higher specific gravity electrolyte, and providing an inlet/outlet groove for introducing the lower specific gravity electrolyte and discharging the mixed electrolyte according to a direction of inertia; and a labyrinth portion having at least one circulation path, wherein an outlet of the circulation path is narrower than an inlet so as to increase the flow velocity of the electrolyte, and the labyrinth portion mixing the lower specific gravity electrolyte, introduced through the inlet/outlet groove, with the higher specific gravity electrolyte, introduced through the guide plate.

The electrolyte mixing apparatus for a battery according to the present invention can increase the flow velocity of both the lower specific gravity electrolyte and the higher specific gravity electrolyte, introduced into the mixing apparatus by inertia, thereby efficiently mixing the electrolyte in a short period of time.

In addition, since the present invention is capable of increasing a flow velocity of the electrolyte, it is suitable for a large capacity battery.

### BRIEF DESCRIPTION OF THE DRAWINGS

The above and other objects, features and other advantages of the present invention will be more clearly understood from the following detailed description when taken in conjunction with the accompanying drawings, in which:
FIGS. 1A and 1B are schematic diagrams describing a summary of an electrolyte mixing apparatus for a battery capable of increasing a flow velocity of an electrolyte according to the present invention;
FIG. 2 is a front perspective view illustrating an electrolyte mixing apparatus for a battery capable of increasing a flow velocity of an electrolyte according to the present invention;
FIG. 3 is a rear perspective view of FIG. 2;
FIG. 4 is a rear view of FIG. 2;
FIG. 5 is a side view of FIG. 2;
FIG. 6 is a plan view of Fig. 2;
FIG. 7 illustrates a circulating path.
FIG. 8 illustrates an example where a height difference is generated by kinetic energy applied from one direction;
FIG. 9 is a plan view illustrating a mixing process of lower specific gravity electrolyte and higher specific gravity electrolyte;
FIG. 10 illustrates a flowing path of higher specific gravity electrolyte;
FIG. 11 illustrates an example where a height difference is generated by kinetic energy applied from an opposite direction;
FIG. 12 is a plan view illustrating a discharging process of a mixed electrolyte; and
FIG. 13 is a perspective view illustrating a discharging process of a mixed electrolyte through a guide plate.

### Description of reference numerals in the drawings

| | | | |
|---|---|---|---|
| 1: | pole plate assembly | 2: | strap |
| 3: | mixing apparatus | 4: | casing |
| A: | higher specific gravity electrolyte | | |
| B: | lower specific gravity electrolyte | | |
| C: | mixed electrolyte | 100: | guide plate |
| 110: | incision portion | 200, 200': | mixing container |
| 210: | receiving portion | 211: | partition wall |
| 21 1a: | outer partition wall | 211b: | inner partition wall |
| 212: | extension wall | 213: | bottom surface |
| 220: | labyrinth portion | 221, 222: | labyrinth wall |
| 221a, 222a: | convergence wall | 221b, 222b: | conversion wall |
| 221c, 222c: | expansion wall | 223: | circulation port |
| 230: | inclined wall | 240: | inlet/outlet groove |
| 251: | first circulation path | 252: | second circulation path |
| 253: | third circulation path | 300: | connecting container |
| 310, 320, 330: | connecting portion | 341, 342: | sidewall |
| 351, 352, 353: | front wall | 400: | guide bar |
| 510: | first guide passage | 520: | second guide passage |

### DETAILED DESCRIPTION OF THE INVENTION

Hereinbelow, to aid to understanding the invention, preferred embodiments of the present invention will be described in detail with reference to the accompanying drawings for allowing those skilled in the art to more clearly comprehend the present invention.

All terms or words used herein should not be interpreted as being limited merely to common and dictionary meanings but should be interpreted as having meanings and concepts which are defined within the technical scope of the present invention.

Unless the context clearly indicates otherwise, it will be further understood that the terms "comprises", "comprising", "includes", and/or "including", when used herein, specify the presence of stated features, integers, steps, operations, elements, and/or components, but do not preclude
the presence or addition of one or more other features, integers, steps, operations, elements, components, and/or groups thereof.

Hereinbelow, exemplary embodiments of the present invention will be described in detail with reference to the accompanying drawings.

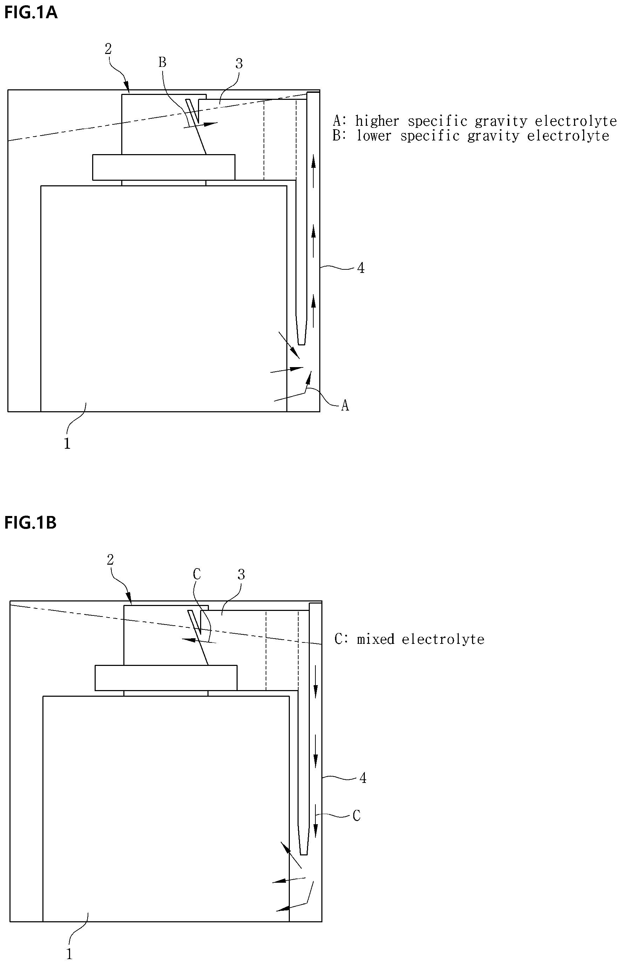

FIGS. 1A and 1B are schematic diagrams describing a summary of an electrolyte mixing apparatus for a battery capable of increasing a flow velocity of an electrolyte according to the present invention.

Referring to FIGS. 1A and 1B, an electrolyte mixing apparatus 3 mixes and discharges an electrolyte by inertia, which is generated according to an operation of vehicles (for example, acceleration, steady speed, deceleration, stopped).

Here, the battery may consist of a casing 4, a pole plate assembly 1, and a strap 2.

The casing 4 provides a place for containing an electrolyte, the pole plate assembly 1, and the strap 2 therein. The electrolyte is dispersed into higher specific gravity electrolyte A and lower specific gravity electrolyte B, and each is disposed at a bottom portion and at an upper portion respectively.

The pole plate assembly 1 consists of multiple positive and negative plates densely arranged alternately, and the strap 2 connects the positive and negative pole plates to each other such that an electric current can flow therebetween.

Here, the casing 4, the pole plate assembly 1, and the strap 2 are generally applied by using known configurations, and thus will not be described here.

The electrolyte mixing apparatus 3 according to the present invention is provided between the pole plate assembly 1 and an inner wall surface of the battery casing 4, and mixes and discharges the electrolyte moved by the inertia. For example, referring to FIG. 1A, when the inertia is applied to the electrolyte in one direction, the lower specific gravity electrolyte B disposed at an upper portion of the casing 4 is introduced into an upper portion of the electrolyte mixing apparatus 3, and the higher specific gravity electrolyte A disposed at a bottom portion of the casing 4 is introduced into the upper portion of the electrolyte mixing apparatus 3 through a passage provided between the inner wall surface of the casing 4.

At this point, in the inside of the battery casing 4, the electrolyte is introduced into the electrolyte mixing apparatus 3 due to kinetic energy generated by such inertia, so a height difference is generated. Thus, the electrolyte mixing apparatus 3 mixes the higher specific gravity electrolyte A moved by the inertia with the lower specific gravity electrolyte B introduced from the upper portion, and then discharges the electrolyte so as to remove the height difference.

In addition, after the electrolyte mixing apparatus 3 discharges mixed electrolyte C in such a process, the height difference is removed and the electrolyte becomes a horizontal surface so that the electrolyte mixing apparatus 3 becomes a state of receiving the mixed electrolyte C therein.

After this, referring to FIG. 1B, the electrolyte is moved to an opposite direction of FIG. 1A by kinetic energy applied in an opposite direction, so a height difference is generated in an opposite side. At this time, the mixed electrolyte in the electrolyte mixing apparatus 3 is quickly discharged to the upper side and the bottom side due to the height difference.

That is, the electrolyte mixing apparatus 3 repeatedly mixes and discharges the higher and the lower specific gravity electrolytes A and B while the height difference of electrolyte by the inertia is generated and removed.

In addition, the present invention increases the flow velocity of the higher specific gravity electrolyte A moved from bottom portion of the casing 4 so as to mix large amounts of higher specific gravity electrolyte A and lower specific gravity electrolyte B during such generation and removal processes of the height difference.

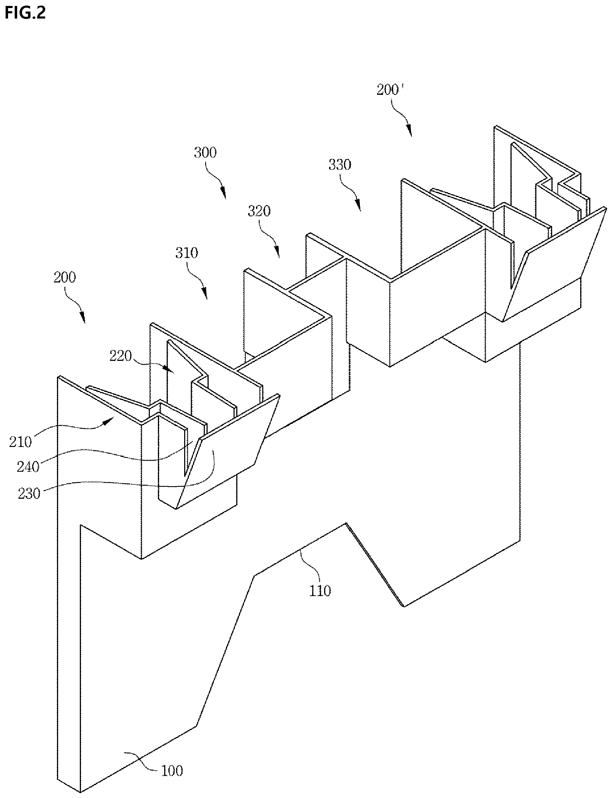

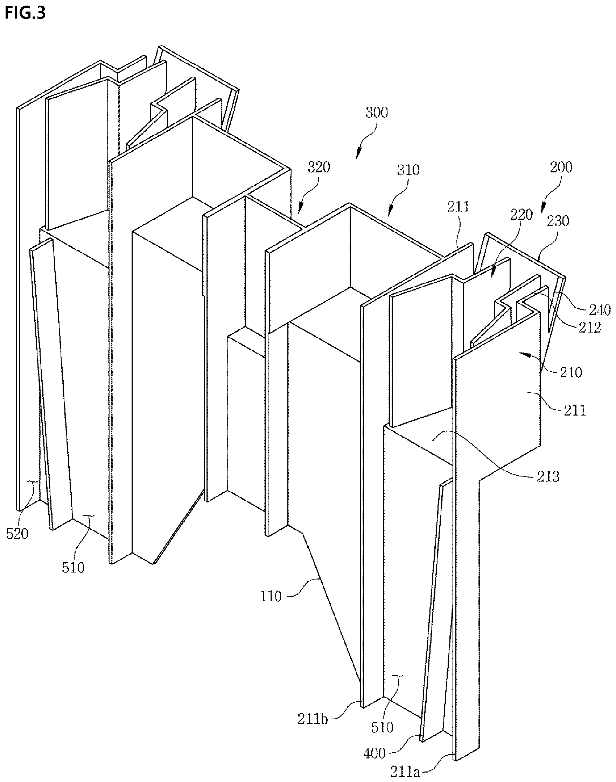

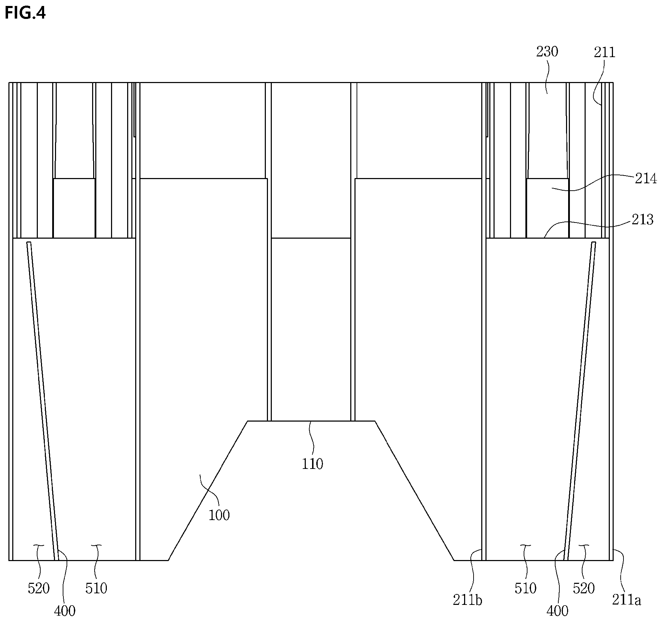

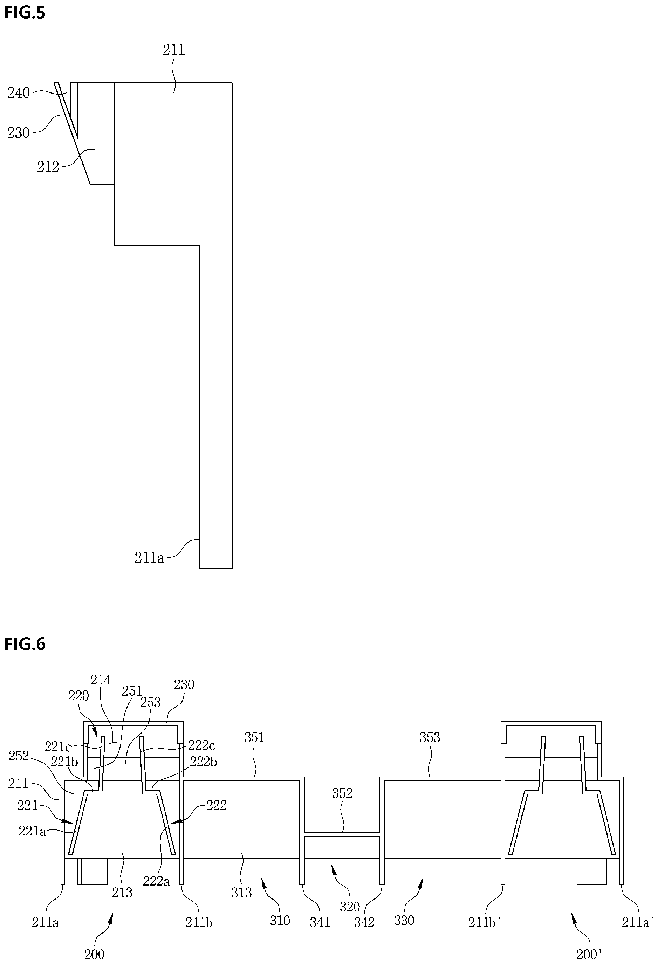

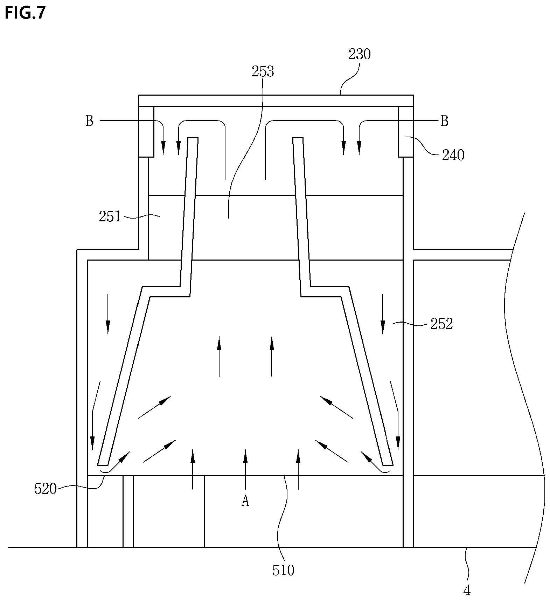

FIG. 2 is a front perspective view, FIG. 3 is a rear perspective view, FIG. 4 is a rear view, FIG. 5 is a side view, FIG. 6 is a plan view illustrating an electrolyte mixing apparatus for a battery capable of increasing a flow velocity of an electrolyte according to the present invention, and FIG. 7 illustrates a circulating path.

Referring to FIGS. 2 to 7, an electrolyte mixing apparatus 3 for a battery capable of increasing a flow velocity of an electrolyte according to the present invention includes a guide plate 100 which is provided between an inner wall surface of a battery casing 4 so as to provide a passage, at least one mixing container 200 mixing an electrolyte, a connecting container 300 connecting and supporting between mixing containers 200, and a guide bar 400 increasing a flow velocity at the guide plate 100.

The guide plate 100 that is an upright panel provides passages between it and the inner wall surface of the casing 4. The passages include a passage that delivers the higher specific gravity electrolyte A disposed at the bottom portion upwards, and a passage that delivers a mixed electrolyte C mixed at the mixing container 200 downwards. Here, the passage for delivering the higher specific gravity electrolyte A upwards and the passage for delivering the mixed electrolyte C downwards may be configured as one passage or may be configured separately.

Further, the guide plate 100 may include an incision portion 110, which is cut in the middle bottom portion of the guide plate 100 so as to deliver the higher specific gravity electrolyte A from the middle portion of the guide plate 100 to the connecting container 300. The incision portion 110 is cut in the middle bottom portion of the guide plate 100 and provides a path for delivering the higher specific gravity electrolyte A disposed at the bottom portion.

In addition, the incision portion 110 may be provided for removing a resistance caused by residues formed by a hot melt adhesive introduced to bond the pole plate assembly 1 of the battery, or removing a resistance by a protrusion on the wall surface of the casing 4.

For example, the incision portion 110 may provide a space for receiving a protrusion or residues when the protrusion on the wall surface of the casing 4 and the residues by the hot melt adhesive exist. That is, when the guide plate 100 is inserted between the wall surface of the casing 4 and the pole plate assembly 1 and the protrusion exists on the wall surface of the casing 4, the protrusion may be received in the space provided by the incision portion 110 and the resistance by the protrusion on the wall surface of the casing 4 can be removed.

The mixing container 200 provides a passage to circulate the introduced higher specific gravity electrolyte A and lower specific gravity electrolyte B so as to mix the higher specific gravity electrolyte A and the lower specific gravity electrolyte B together at the upper portion of the guide plate 100.

More specifically, the mixing container 200 is configured to form a bent bottom surface 213 at a top portion of the guide plate 100, and includes a receiving portion 210 provided with a space between opposite wall surfaces, a labyrinth portion 220 circulating the electrolyte inside the receiving portion 210, an inclined wall 230 extending slantingly from a front surface of the receiving portion 210, and an inlet/outlet groove 240 of introducing the lower specific gravity electrolyte B disposed at an upper portion and discharging the mixed electrolyte C.

The receiving portion 210 includes the bottom surface 213 bent from the top portion of the upright guide plate 100, opposite partition walls 211 separating spaces standing at opposite sides, an upward step 214 extending upward from the bottom surface 213, and an extension wall 212 extending from the partition wall 211 and providing the labyrinth portion 220 and circulation paths.

The partition walls 211 are a pair of walls spaced apart from each other, and define a space for providing the labyrinth portion 220 therein. At this point, ends of the partition walls 211 protrude towards the wall surface of the casing 4 so as to provide a passage between the partition walls 211.

That is, the higher specific gravity electrolyte A disposed at the bottom portion flows to the receiving portion 210 providing the labyrinth portion 220 therein through the passage defined between the partition walls 211.

The upward step 214 extends upward from the bottom surface 213 and supports the labyrinth portion 220. Here, since the upward step 214 is placed above the bottom surface 213, the upward step 214 has a configuration that can be close to the strap 2 at a top portion of the pole plate assembly 1.

For example, as shown at FIGS. 1A and 1B, the strap 2 connects multiple positive and negative pole plates such that an electric current can flow therebetween.

Accordingly, in the present invention, the upward step 214 is configured to have a structure corresponding to shapes of the strap 2 and the pole plate assembly 1, thereby enabling easy installing of the pole plate assembly 1 to which the strap 2 is connected. Such a structure of the upward step 214 realizes an easy installation of the mixing apparatus 3 in the casing 4.

The extension wall 212 extends to be bent from an outer partition wall 211a disposed at an outer side among the pair of the partition walls 211. Here, the extension wall 212 is upright and spaced apart from the labyrinth portion 220 so as to provide a passage for allowing a flow of the electrolyte between the extension wall 212 and the labyrinth portion 220. Also, the extension wall 212 is configured to form an outer wall of the upward step 214.

The inclined wall 230 slantingly extends upward from the end of the upward step 214, wherein the upward step 214 is surrounded by the extension wall 212 and an inner partition wall 211b, and extends upward from the bottom surface 213 of the receiving portion 210. At this point, the inclined wall 230 slantingly extends upward and is spaced apart from the ends of the extension wall 212 and the inner partition wall 211b so as to provide the inlet/outlet groove 240.

The inlet/outlet groove 240 is a groove spaced apart from the ends of the inclined wall 230, the extension wall 212, and the inner partition wall 211b. The lower specific gravity electrolyte B disposed at the upper portion of the casing 4 is introduced and the mixed electrolyte C is discharged, through the inlet/outlet groove 240.

Referring to FIGS. 6 and 7, the labyrinth portion 220 includes opposite labyrinth walls 221 and 222 which are upright and face each other in the receiving portion 210, and a circulation port 223 providing an inlet/outlet between the pair of labyrinth walls 221 and 222.

The pair of the labyrinth walls 221 and 222 includes a first labyrinth wall 221 extending while being spaced apart from the outer partition wall 211a and the extension wall 212, and a second labyrinth wall 222 extending while being spaced apart from the inner partition wall 211b.

The first labyrinth wall 221 defines a first circulation path 251, the second labyrinth wall 222 defines a second circulation path 252, and a third circulation path 253 is defined between the first labyrinth wall 221 and the second labyrinth wall 222.

The circulation of electrolyte in the first circulation path 251 to the third circulation path 253 is different according to a direction of inertia. That is, when the inertia is applied to the direction in which the electrolyte is introduced, the first circulation path 251 and the second circulation path 252 circulate the lower specific gravity electrolyte B introduced through the inlet/outlet groove 240 and discharge the lower specific gravity electrolyte B into the third circulation path 253, and the third circulation path 253 circulates the higher specific gravity electrolyte A introduced through the guide plate 100 and discharges the higher specific gravity electrolyte A into the first circulation path 251 and the second circulation path 252. That is, the first circulation path 251 and the second circulation path 252 mix the lower specific gravity electrolyte B and the higher specific gravity electrolyte A together, and then discharge the mixed electrolyte into the third circulation path 253. Thus, in the third circulation path 253, the mixed electrolyte and the higher specific gravity electrolyte A are mixed together.

The mixed electrolyte C as described above is discharged when the inertia is applied to the opposite direction or when the height difference generated by the inertia is removed.

Additionally, in an opposite case, the mixed electrolyte C which is a result of mixing the lower specific gravity electrolyte B and the higher specific gravity electrolyte A circulates to be discharged outside the mixing container 200. For example, the first circulation path 251 and the second circulation path 252 guide the mixed electrolyte C to the inlet/outlet groove 240, and the third circulation path 253 guides the mixed electrolyte C to the guide plate 100.

In the embodiment, the first labyrinth wall 221 and the second labyrinth wall 222 have the same structure, so the first labyrinth wall 221 will be described as an example.

The first labyrinth wall 221 includes a convergence wall 221a spaced apart from the outer partition wall 211a, a conversion wall 221b bent from the convergence wall 221a, and a expansion wall 221c bent from the conversion wall 221b.

The convergence wall 221a is upright at the bottom surface 213 and slantingly extends. The convergence wall 221a slantingly extends such that a gap between the convergence wall 221a and the outer partition wall 211a becomes narrower in a direction toward the guide plate 100 (an exit side), thereby forming an exit of the first circulation path 251 (or the second circulation path 252).

The conversion wall 221b is bent from the end of the convergence wall 221a. At this point, the conversion wall 221b is formed in a similar structure with a structure of the extension wall 212 connected to the partition wall 211. Such structure is to form the first circulation path 251 capable of switching the flow direction of the electrolyte introduced through the convergence wall 221a or the expansion wall 221c.

The expansion wall 221c extends and is bent from the conversion wall 221b in the same direction as that of the extension wall 212, and forms the first circulation path 251 (or the second circulation path 252). Here, the expansion wall 221c has a gap wider than gaps between the convergence wall 221a and the partition wall 211, and between the conversion wall 221b and the partition wall 211. In addition, the end of the expansion wall 221c is spaced apart from the inclined wall 230, thereby increasing the flow velocity of the higher specific gravity electrolyte A introduced from the third circulation path 253. Further, the end of the expansion wall 221c spaced apart from the inclined wall 230 may be connected with the inlet/outlet groove 240.

Here, as described above, the first circulation path 251 and the second circulation path 252 defined by the first labyrinth wall 221 and the second labyrinth wall 222 are capable of increasing the flow velocity of the electrolyte since the exit side (between the convergence wall 221a and the partition wall 211) has the narrowest gap.

In addition, the third circulation path 253 is capable of increasing the flow velocity of the higher specific gravity electrolyte A since an exit side, the circulation port 223, is configured to be narrower than an entrance side connecting the guide plate 100. Additionally, the flow velocities of the higher specific gravity electrolyte A and the mixed electrolyte C introduced from the third circulation path 253 into the first circulation path 251, and from the third circulation path 253 into the second circulation path 252 can be increased as passing the narrow gap between the expansion wall 221c and the inclined wall 230.

Referring to FIGS. 3, 4, and 7, the guide bar 400 extends in a longitudinal direction on a surface of the guide plate 100 between the ends of the opposite partition walls 211, and separates a first guide passage 510 and a second guide passage 520 from each other. For example, the guide bar 400 slantingly extends from the bottom of the guide plate 100 in a direction toward the connecting container 300.

Therefore, the first guide passage 510 becomes enlarged gradually from a starting point (the bottom of the guide plate 100) to an end point (the entrance of the third circulation path 253) reaching the bottom surface 213, while the second guide passage 520 becomes narrow gradually. Such a difference in the shape of the passages is to deliver the higher specific gravity electrolyte A disposed at the bottom portion of the casing 4 to the first circulation path 251 and the second circulation path 252 through the third circulation path 253. That is, the first guide passage 510 extending to the third circulation path 253 is enlarged so as to deliver a large amount of the higher specific gravity electrolyte A introduced into the mixing container 200 from the bottom portion of the casing 4.

In addition, a top of the second guide passage 520 is close to a starting point of the first circulation path 251, as a width of the second guide passage 520 becomes narrow, thus the flow velocity of the higher specific gravity electrolyte A flowing therein increases. The higher specific gravity electrolyte A having such higher velocity bumps into the mixed electrolyte C discharged from the first circulation path 251, thereby being guided to flow to the third circulation path 253.

That is, the second guide passage 520 increases the flow velocity of the higher specific gravity electrolyte A moved from the bottom portion of the casing 4, thus guiding a flow direction of the mixed electrolyte C to the third circulation path 253, wherein the mixed electrolyte C is the result of mixing the lower specific gravity electrolyte B discharged from the first circulation path 251 with the higher specific gravity electrolyte A together.

According to such a structure, the higher specific gravity electrolyte A disposed at the bottom portion of the casing 4 flows to the third circulation path 253 of the mixing container 200 through the first guide passage 510 and the second guide passage 520, and the higher specific gravity electrolyte A is mixed with the lower specific gravity electrolyte B introduced from the first circulation path 251 and the second circulation path 252 through the inlet/outlet groove 240 and circulates together with the lower specific gravity electrolyte B.

Referring to FIGS. 2, 3, and 6, the connecting container 300 is configured to divide multiple spaces between opposite mixing containers 200 so as to receive the higher specific gravity electrolyte A introduced from the bottom portion of the casing 4.

For example, the connecting container 300 is divided into first to third connecting portions 310 to 330 as a first side wall 341 and a second side wall 342 are configured to be spaced apart from each other at a position between the first mixing container 200 and a second mixing container 200'. Here, the first to third connecting portions 310 to 330 are configured as a second bottom surface 313 horizontally bent from the guide plate 100, and may be divided by a first front wall 351 forming a front surface as extending between the inner partition wall 211b and the first side wall 341, a second front wall 352 forming a front surface of a second connection portion 320 as extending between the first side wall 341 and the second side wall 342, and a third front wall 353 forming a front surface as extending between the second side wall 342 and an inner partition wall 211b' of the second mixing container 200'.

Here, the end portions of the first side wall 341 and the second side wall 342 protrude toward the surface of the guide plate 100 and provide the passage delivering the higher specific gravity electrolyte A introduced from the incision portion 110. That is, the first side wall 341 and the inner partition wall 211b of the first mixing container 200 provide a passage therebetween, wherein the passage is connected to the first connecting portion 310. In addition, the first side wall 341 and the second side wall 342 are spaced apart from each other so as to provide a passage for delivering the higher specific gravity electrolyte A to the second connecting portion through the incision portion 110.

In the same manner, the second side wall 342 and the inner partition wall 211b' of the second mixing container 200' are spaced apart from each other and provide a passage connecting the incision portion 110 to the third connecting portion 330.

In addition, the first front wall 351 and the third front wall 353 are formed on the same plane, while the second front wall 352 is placed at a position in back of the first front wall 351 and the third front wall 353. That is, the second front wall 352 is located to form a groove between the first front wall 351 and the third front wall 353.

Additionally, the first connecting portion 310 and the first mixing container 200 are configured in a stepped structure, and the third connecting portion 330 and the second mixing container 200' are configured in a stepped structure.

The stepped structure and groove are configured as considering an arrangement of the strap 2 connected to an upper surface of the pole plate assembly 1. For example, the strap 2 is configured in an L-shape, and a bus bar or other electric current flowing devices are connected to the strap 2 so as to be connected to positive and negative terminal posts provided on the upper surface of the casing 4. Therefore, when a pair of straps 2 is assembled on the pole plates to face each other while being spaced apart from each other, the first connecting portion 310 may be installed to be connected to a first strap 2, and the third connecting portion 330 may be installed to be connected to a second strap 2.

In addition, as stated above, the incision portion 110 performs a role as the path for delivering the higher specific gravity electrolyte A, and also may be configured to realize a purpose for removing resistance caused by residues of the hot melt adhesive, in case of the hot melt adhesive which is introduced to bond the pole plate assembly 1 inside the casing 4 remains on the wall surface of the casing 4.

For example, the hot melt adhesive is generally injected at a predetermined location of the wall surface of the casing 4 and is hardened at the bottom surface 213. Here, when the hot melt adhesive is injected through the wall surface of the casing 4, there is a possibility that the hot melt is not fully introduced to the bottom surface 213, but may remain on the wall surface of the casing 4. At this point, when the guide plate 100 is inserted into between the pole plate assembly 1 and the wall surface of the casing 4, the residues of the hot melt adhesive on the wall surface of the casing 4 may interfere with the insertion of the guide plate 100.

In the present invention, to overcome such a problem, the incision portion 110 is formed with the consideration of the injecting location or point of the hot melt adhesive. That is, the present invention prevents the interference due to the residues of the hot melt adhesive as the incision portion 110 is formed considering the injecting location or point of the hot melt adhesive.

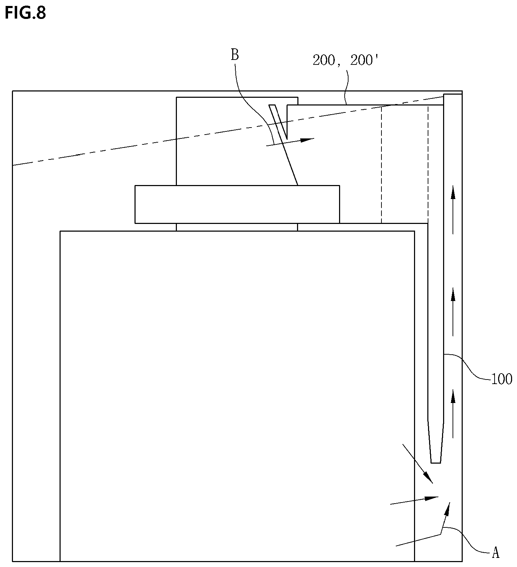

The present invention includes such structures as explained above, and hereinbelow, the operation of mixing the electrolyte achieved by such structures will be described with reference to FIGS. 8 to 13.

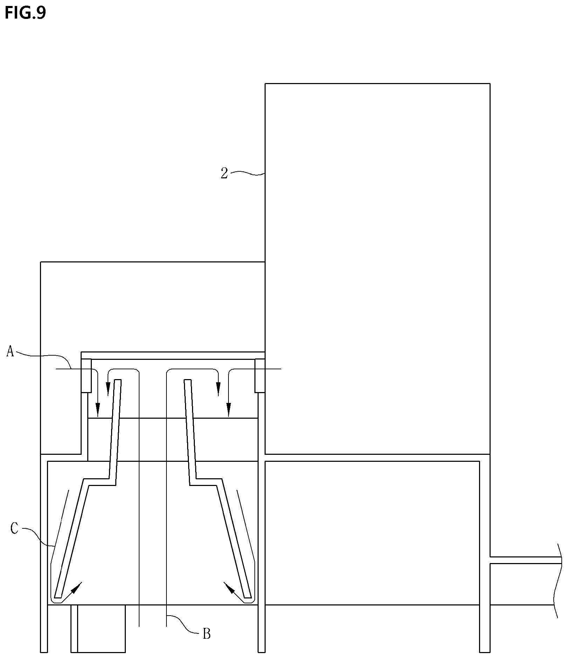

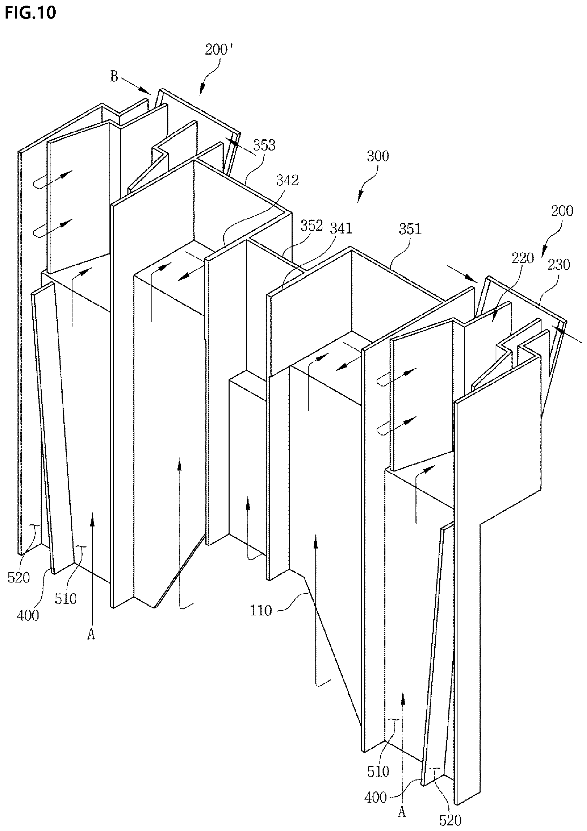

FIG. 8 illustrates an example of generating a height difference by kinetic energy applied from one direction, FIG. 9 is a plan view illustrating a mixing process of the lower specific gravity electrolyte B and the higher specific gravity electrolyte A, and FIG. 10 illustrates a flowing path of the higher specific gravity electrolyte A.

For example, referring to FIGS. 8 to 10, when a vehicle is accelerated from a stopped or steady speed state, a height difference may be generated in the electrolyte in a battery of the vehicle by kinetic energy applied from one direction due to inertia.

Therefore, the lower specific gravity electrolyte B disposed at the upper portion is introduced into the first mixing container 200 and the second mixing container 200' through the inlet/outlet groove 240, and the higher specific gravity electrolyte A disposed at the bottom portion is introduced into the first mixing container 200 and the second mixing container 200' through the first guide passage 510 and/or the second guide passage 520 due to inertia.

At this point, the lower specific gravity electrolyte B flows to the first circulation path 251 and the second circulation path 252 after being introduced into the mixing container 200 through the inlet/outlet groove 240.

In addition, the higher specific gravity electrolyte A flows into the first circulation path 251 and the second circulation path 252 after being introduced into the third circulation path 253 through the first guide passage 510. At this point, the flow direction of the higher specific gravity electrolyte A is changed due to the narrow space between the end of the expansion wall 221c and the inclined wall 230, and the higher specific gravity electrolyte A is introduced into the first circulation path 251 and the second circulation path 252. Therefore, the flow velocity of the higher specific gravity electrolyte A is increased while flowing from the wide space to the narrow space.

Therefore, the lower specific gravity electrolyte B and the higher specific gravity electrolyte A are mixed at the first circulation path 251 and the second circulation path 252.

In addition, the mixed electrolyte C provided at the first circulation path 251 and the second circulation path 252 is discharged into the third circulation path 253 through the exits of the first circulation path 251 and the second circulation path 252 (between the convergence wall 221a and the partition wall 211) which are configured to be narrower than the entrance. Therefore, the flow velocity of the mixed electrolyte C is increased once more and mixed with the higher specific gravity electrolyte A once more.

That is, in the present invention, the higher specific gravity electrolyte A and the lower specific gravity electrolyte B are mixed together while circulating through the first to third circulation paths 251, 252, and 253 provided by the pair of the labyrinth walls 221 and 222.

Afterwards, when the kinetic energy applied from one direction by the inertia is removed, the higher and the lower specific gravity electrolyte A and B push the mixed electrolyte C which was mixed at the mixing container 200 during the process of removing the height difference as shown in FIG. 8. At this point, the mixed electrolyte C is discharged to the outside of the mixing container 200 as the height of the electrolyte in the mixing apparatus 3 becomes lower, and when the electrolyte forms the horizontal surface, the mixing container 200 receives the mixed electrolyte C therein.

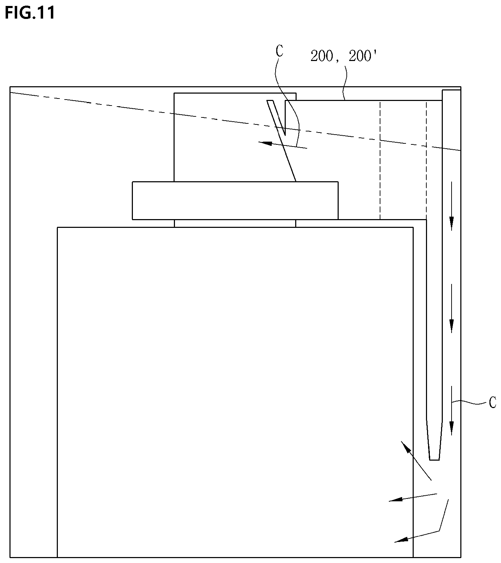

The mixed electrolyte C in the mixing container 200 is discharged as a height difference is generated oppositely by the kinetic energy applied from an opposite direction, and during the process of removing the height difference, the lower specific gravity electrolyte B and the higher specific gravity electrolyte A are introduced into the mixing container 200. This will be described with reference to FIGS. 11 to 13.

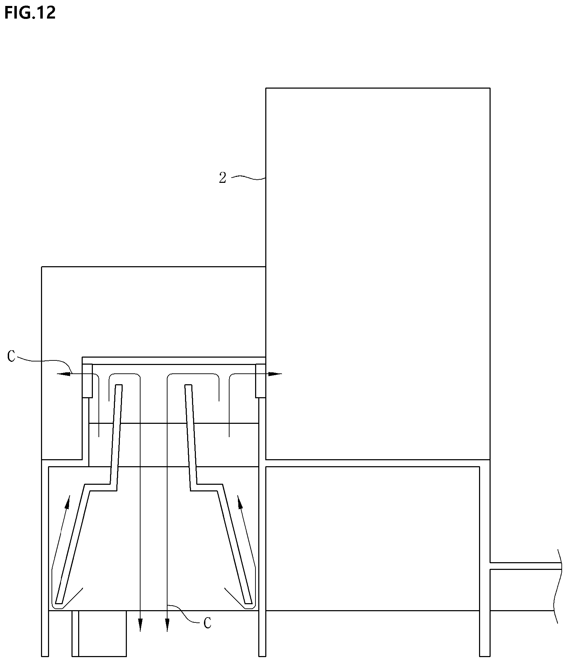

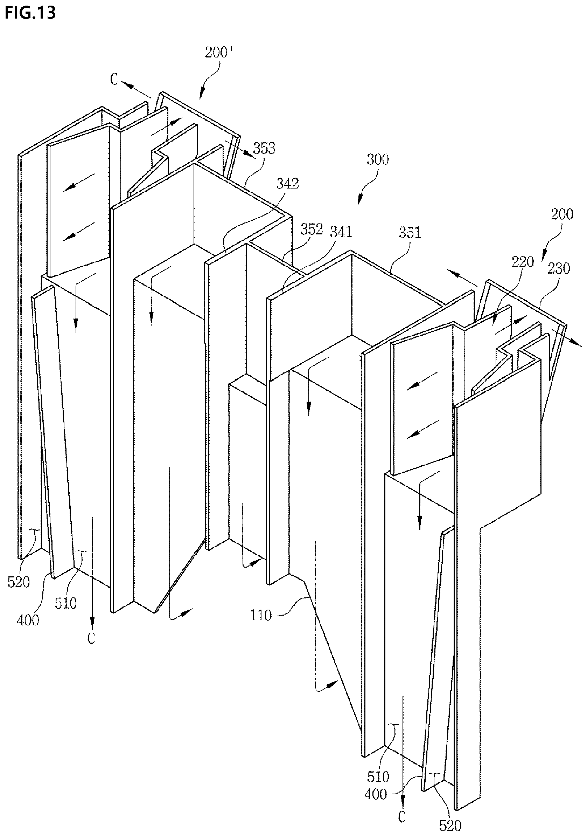

FIG. 11 illustrates an example of generating the height difference by kinetic energy applied from the opposite direction, FIG. 12 is a plan view illustrating a discharging process of the mixed electrolyte C, and FIG. 13 is a perspective view illustrating a discharging process of the mixed electrolyte C through the guide plate 100.

Referring to FIGS. 11 to 13, when the opposite directional inertia is applied to the higher and the lower specific gravity electrolyte A and B, the height of the electrolyte in the mixing apparatus 3 becomes lower due to kinetic energy, thereby causing a height difference. At this point, the remaining mixed electrolyte C in the first mixing container 200 and the second mixing container 200' is discharged to the outside of the mixing containers 200 and 200' by the kinetic energy. That is, the mixed electrolyte C is discharged into the upper portion of the battery through the inlet/outlet groove 240 while the surface height of the electrolyte gradually becomes lower, and is discharged downward into the bottom portion of the battery through the first guide passage 510 and/or the second guide passage 520.

Afterwards, when the inertia applied to the battery is removed, the height difference is removed, thereby the height of the electrolyte in the mixing apparatus 3 becomes higher and the height of the electrolyte in the opposite side becomes lower. In this process, the lower specific gravity electrolyte B and the higher specific gravity electrolyte A are efficiently mixed together through the processes of introduction and circulation thereof.

That is, the electrolyte mixing apparatus 3 for the battery capable of increasing the flow velocity of the electrolyte efficiently mixes the lower specific gravity electrolyte B and the higher specific gravity electrolyte A according to the acting direction of the kinetic energy, and discharges the mixed electrolyte C outside thereof when the kinetic energy is applied in an opposite direction. Further, a large amount of electrolyte can be efficiently mixed in a short period of time by controlling the space of the passage so as to increase the flow velocity of the electrolyte.

It is thus well known to those skilled in that art that the present invention is not limited to the embodiment disclosed in the detailed description, and the patent right of the present invention should be defined by the scope and spirit of the invention as disclosed in the accompanying claims. Accordingly, it should be understood that the present invention includes various modifications, additions and substitutions without departing from the scope and spirit of the invention as disclosed in the accompanying claims.

## Claims

1. An electrolyte mixing apparatus for a battery, the apparatus being configured to increase a flow velocity of an electrolyte and comprising:
a guide plate (100) provided between an inner wall surface of a battery casing (4) and a pole plate assembly (1) so as to provide a passage to deliver higher specific gravity electrolyte (A) upwards by inertia, and to deliver downwards mixed electrolyte (C) provided at an upper portion thereof; and
at least one mixing container (200) mixing the higher specific gravity electrolyte (A), introduced through the passage provided on the guide plate (100), with the lower specific gravity electrolyte (B), introduced into the upper portion, and discharging the mixed electrolyte (C), according to a direction of inertia,
wherein the mixing container (200) comprises:
a receiving portion (210) providing a space in a top portion of the guide plate (100) for mixing the lower specific gravity electrolyte (B) with the higher specific gravity electrolyte (A), and providing an inlet/outlet groove (240) for introducing the lower specific gravity electrolyte (B) and discharging the mixed electrolyte (C) according to a direction of inertia;
wherein the mixing container (200) comprises:
a labyrinth portion (220) having at least one circulation path, wherein an outlet of the circulation path is narrower than an inlet so as to increase the flow velocity of the electrolyte, and the labyrinth portion (220) mixing the lower specific gravity electrolyte (B), introduced through the inlet/outlet groove (240), with the higher specific gravity electrolyte (A), introduced through the guide plate (100),
**characterized in that** the circulation path comprises:
a first circulation path (251) provided between an outer partition wall (211a) of the receiving portion (210) and a first labyrinth wall (221) spaced apart therefrom;
a second circulation path (252) provided between an inner partition wall (211b) of the receiving portion (210) and a second labyrinth wall (222) spaced apart therefrom; and
a third circulation path (253) extending between the first labyrinth wall (221) and the second labyrinth wall (222) so as to be connected with the passage provided on the guide plate (100),
wherein
inlets of the first circulation path (251) and the second circulation path (252) are connected with the inlet/outlet groove (240) and an outlet of the third circulation path (253), and
outlets thereof are connected with an inlet of the third circulation path (253),
thereby mixing the lower specific gravity electrolyte (B) introduced through the inlet/outlet groove (240) with the higher specific gravity electrolyte (A) introduced through the third circulation path (253), and then discharging the mixed electrolyte (C) into the third circulation path (253).

2. The electrolyte mixing apparatus of claim 1, wherein the labyrinth portion comprises:
a convergence wall (221a) extending such that a gap between the convergence wall (221a) and the outer partition wall (211a) of the receiving portion (210) becomes narrower toward the guide plate (100);
a conversion wall (221b) being bent from the convergence wall (221a); and
an expansion wall (221c) being bent forward from the conversion wall (221b) and extending to form an end spaced apart from a front surface of the receiving portion (210).

3. The electrolyte mixing apparatus of claim 1, wherein the passage of the guide plate (100) extends in a longitudinal direction at a location between opposite wall surfaces of the receiving portion (210), and is provided between ends protruding from one surface of the guide plate (100) toward the inner wall surface of the casing (4).

4. The electrolyte mixing apparatus of claim 1, wherein the passage of the guide plate (100) is partitioned by a guide bar (400) extending in a longitudinal direction on a surface of the guide plate at a location between spaced ends protruding from opposite wall surfaces of the receiving portion (210).

5. The electrolyte mixing apparatus of claim 4, wherein the passage of the guide plate (100) comprises:
a first guide passage (510) provided on one side of the guide bar (400) slantingly extending, with a width of the first guide passage becoming enlarged as the first guide passage (510) goes upward; and
a second guide passage (520) provided on the other side of the guide bar (400), with a width of the second guide passage becoming narrow as the second guide passage (520) goes upward.

6. The electrolyte mixing apparatus of claim 1, further comprising: a connecting container (300) connected between opposite mixing containers (200) and provided with multiple connecting portions partitioned at the top portion of the guide plate (100).

7. The electrolyte mixing apparatus of claim 1, the receiving portion (210) further comprising: an inclined wall (230) inclinedly extending upward from a front surface of the receiving portion (210) to be spaced apart from opposite wall surfaces of the receiving portion (210), and providing the inlet/outlet groove (240) between the inclined wall (230) and the opposite wall surfaces of the receiving portion (210).

## Patentansprüche

1. Elektrolytmischvomchtung für eine Batterie, wobei die Vorrichtung so konfiguriert ist, dass sie eine Strömungsgeschwindigkeit eines Elektrolyts erhöht, und Folgendes umfasst:
eine Führungsplatte (100), die zwischen einer Innenwandfläche eines Batteriegehäuses (4) und einer Polplattenanordnung (1) vorgesehen ist, um einen Durchgang bereitzustellen, um einen Elektrolyt (A) mit höherem spezifischem Gewicht durch Trägheit nach oben zu befördern und um einen gemischten Elektrolyt (C), der an einem oberen Abschnitt davon vorgesehen ist, nach unten zu befördern; und
mindestens einen Mischbehälter (200), der den Elektrolyt (A) mit höherem spezifischem Gewicht, der durch den auf der Führungsplatte (100) vorgesehenen Durchgang eingeführt wird, mit dem Elektrolyt (B) mit niedrigerem spezifischem Gewicht, der in den oberen Abschnitt eingeführt wird, mischt und den gemischten Elektrolyt (C) gemäß einer Trägheitsrichtung abgibt,
wobei der Mischbehälter (200) umfasst:
einen Aufnahmeabschnitt (210), der einen Raum in einem oberen Abschnitt der Führungsplatte (100) zum Mischen des Elektrolyts (B) mit geringerem spezifischen Gewicht mit dem Elektrolyt (A) mit höherem spezifischen Gewicht bereitstellt, und der eine Einlass-/Auslassnut (240) zum Einführen des Elektrolyts (B) mit geringerem spezifischen Gewicht und zum Ablassen des gemischten Elektrolyten (C) gemäß einer Trägheitsrichtung bereitstellt;
wobei der Mischbehälter (200) umfasst:
einen Labyrinthabschnitt (220), der mindestens einen Zirkulationsweg aufweist, wobei ein Auslass des Zirkulationsweges schmaler als ein Einlass ist, um die Strömungsgeschwindigkeit des Elektrolyts zu erhöhen, und wobei der Labyrinthabschnitt (220) den Elektrolyt (B) mit niedrigerem spezifischem Gewicht, der durch die Einlass-/Auslassnut (240) eingeführt wird, mit dem Elektrolyt (A) mit höherem spezifischem Gewicht, der durch die Führungsplatte (100) eingeführt wird, mischt, **dadurch gekennzeichnet, dass** der Zirkulationsweg umfasst:
einen ersten Zirkulationsweg (251), der zwischen einer äußeren Trennwand (211a) des Aufnahmeabschnitts (210) und einer ersten Labyrinthwand (221), die davon beabstandet ist, vorgesehen ist;
einen zweiten Zirkulationsweg (252), der zwischen einer inneren Trennwand (211b) des Aufnahmeabschnitts (210) und einer zweiten Labyrinthwand (222), die davon beabstandet ist, vorgesehen ist; und
einen dritten Zirkulationsweg (253), der sich zwischen der ersten Labyrinthwand (221) und der zweiten Labyrinthwand (222) erstreckt, um mit dem an der Führungsplatte (100) vorgesehenen Durchgang verbunden zu werden,
wobei
Einlässe des ersten Zirkulationsweges (251) und des zweiten Zirkulationsweges (252) mit der Einlass-/Auslassnut (240) und einem Auslass des dritten Zirkulationsweges (253) verbunden sind, und
Auslässe davon mit einem Einlass des dritten Zirkulationsweges (253) verbunden sind,
so dass der Elektrolyt (B) mit niedrigerem spezifischem Gewicht, der durch die Einlass-/Auslassnut (240) eingeführt wird, mit dem Elektrolyt (A) mit höherem spezifischem Gewicht, der durch den dritten Zirkulationsweg (253) eingeführt wird, gemischt wird und der gemischte Elektrolyt (C) dann in den dritten Zirkulationsweg (253) abgelassen wird.

2. Elektrolytmischvorrichtung nach Anspruch 1, wobei der Labyrinthabschnitt umfasst:
eine Konvergenzwand (221a), die sich so erstreckt, dass ein Spalt zwischen der Konvergenzwand (221a) und der äußeren Trennwand (211a) des Aufnahmeabschnitts (210) in Richtung der Führungsplatte (100) schmaler wird;
eine Umwandlungswand (221b), die von der Konvergenzwand (221a) abgewinkelt ist; und
eine Expansionswand (221c), die von der Umwandlungswand (221b) nach vorne gebogen ist und sich so erstreckt, dass sie ein Ende bildet, das von einer vorderen Fläche des Aufnahmeabschnitts (210) beabstandet ist.

3. Elektrolytmischvomchtung nach Anspruch 1, wobei sich der Durchgang der Führungsplatte (100) in einer Längsrichtung an einer Stelle zwischen gegenüberliegenden Wandoberflächen des Aufnahmeabschnitts (210) erstreckt und zwischen Enden vorgesehen ist, die von einer Oberfläche der Führungsplatte (100) in Richtung der inneren Wandoberfläche des Gehäuses (4) vorstehen.

4. Elektrolytmischvomchtung nach Anspruch 1, wobei der Durchgang der Führungsplatte (100) durch eine Führungsstange (400) unterteilt ist, die sich in einer Längsrichtung auf einer Oberfläche der Führungsplatte an einer Stelle zwischen beabstandeten Enden erstreckt, die von gegenüberliegenden Wandflächen des Aufnahmeabschnitts (210) vorstehen.

5. Elektrolytmischvomchtung nach Anspruch 4, wobei der Durchgang der Führungsplatte (100) umfasst:
einen ersten Führungsdurchgang (510), der auf einer Seite der Führungsstange (400) vorgesehen ist und sich schräg erstreckt, wobei sich eine Breite des ersten Führungsdurchgangs vergrößert, wenn der erste Führungsdurchgang (510) nach oben geht; und
einen zweiten Führungsdurchgang (520), der auf der anderen Seite der Führungsstange (400) vorgesehen ist, wobei eine Breite des zweiten Führungsdurchgangs schmaler wird, wenn der zweite Führungsdurchgang (520) nach oben geht.

6. Elektrolytmischvomchtung nach Anspruch 1, die ferner umfasst: einen Verbindungsbehälter (300), der zwischen gegenüberliegenden Mischbehältern (200) angeschlossen ist und mit mehreren Verbindungsabschnitten versehen ist, die am oberen Abschnitt der Führungsplatte (100) unterteilt sind.

7. Elektrolytmischvomchtung nach Anspruch 1, wobei der Aufnahmeabschnitt (210) ferner Folgendes umfasst: eine geneigte Wand (230), die sich von einer vorderen Fläche des Aufnahmeabschnitts (210) schräg nach oben erstreckt, so dass sie von gegenüberliegenden Wandflächen des Aufnahmeabschnitts (210) beabstandet ist, und Bereitstellen der Einlass-/Auslassnut (240) zwischen der geneigten Wand (230) und den gegenüberliegenden Wandflächen des Aufnahmeabschnitts (210).

## Revendications

1. Dispositif de mélange d'électrolyte pour une batterie, le dispositif étant configuré pour augmenter une vitesse d'écoulement d'un électrolyte et comprenant :
une plaque de guidage (100) placée entre une surface de paroi intérieure d'un boîtier de batterie (4) et un ensemble de plaques polaires (1) de manière à fournir un passage pour acheminer vers le haut, par inertie, un électrolyte de poids spécifique supérieur (A), et pour acheminer vers le bas un électrolyte mélangé (C) placé dans une partie supérieure de celle-ci ; et
au moins un récipient de mélange (200) mélangeant l'électrolyte de poids spécifique supérieur (A) introduit par le passage prévu sur la plaque de guidage (100), avec l'électrolyte de poids spécifique inférieur (B), introduit dans la partie supérieure, et déchargeant l'électrolyte mélangé (C) selon une direction d'inertie,
dans lequel le récipient de mélange (200) comprend :
une partie réceptrice (210) offrant un espace dans une partie supérieure de la plaque de guidage (100) pour mélanger l'électrolyte de poids spécifique inférieur (B) avec l'électrolyte de poids spécifique supérieur (A), et offrant une rainure d'entrée/sortie (240) pour introduire l'électrolyte de poids spécifique inférieur (B) et décharger l'électrolyte mélangé (C) en fonction d'une direction d'inertie ;
dans lequel le récipient de mélange (200) comprend :
une partie labyrinthe (220) comportant au moins une voie de circulation, dans laquelle une sortie de la voie de circulation est plus étroite qu'une entrée de manière à augmenter la vitesse d'écoulement de l'électrolyte, et la partie labyrinthe (220) mélangeant l'électrolyte de poids spécifique inférieur (B) introduit par la rainure d'entrée/sortie (240) avec l'électrolyte de poids spécifique supérieur (A) introduit par la plaque de guidage (100),
**caractérisé en ce que** la voie de circulation comprend
une première voie de circulation (251) prévue entre une paroi de séparation extérieure (211a) de la partie réceptrice (210) et une première paroi de labyrinthe (221) espacée de celle-ci ;
une deuxième voie de circulation (252) prévue entre une paroi de séparation intérieure (211b) de la partie réceptrice (210) et une deuxième paroi de labyrinthe (222) espacée de celle-ci ; et
une troisième voie de circulation (253) s'étendant entre la première paroi de labyrinthe (221) et la deuxième paroi de labyrinthe (222) de manière à être reliée au passage prévu sur la plaque de guidage (100),
dans lequel
des entrées de la première voie de circulation (251) et de la deuxième voie de circulation (252) sont reliées à la rainure d'entrée/sortie (240) et à une sortie de la troisième voie de circulation (253), et
des sorties de celle-ci sont reliées à une entrée de la troisième voie de circulation (253),
mélangeant ainsi l'électrolyte de poids spécifique inférieur (B) introduit par la rainure d'entrée/sortie (240) avec l'électrolyte de poids spécifique supérieur (A) introduit par la troisième voie de circulation (253), puis déchargeant l'électrolyte mélangé (C) dans la troisième voie de circulation (253).

2. Dispositif de mélange d'électrolyte de la revendication 1, dans lequel la partie labyrinthe comprend :
une paroi de convergence (221a) s'étendant de telle sorte qu'un espace entre la paroi de convergence (221a) et la paroi de séparation extérieure (211a) de la partie réceptrice (210) devienne plus étroit vers la plaque de guidage (100) ;
une paroi de conversion (221b) étant pliée par rapport à la paroi de convergence (221a) ; et
une paroi d'expansion (221c) pliée vers l'avant à partir de la paroi de conversion (221b) et s'étendant pour former une extrémité espacée d'une surface avant de la partie réceptrice (210).

3. Dispositif de mélange d'électrolyte de la revendication 1, dans lequel le passage de la plaque de guidage (100) s'étend dans une direction longitudinale à un endroit situé entre des surfaces de paroi opposées de la partie saillante (210), et est fourni entre les extrémités faisant saillie d'une surface de la plaque de guidage (100) vers la surface de paroi intérieure du boîtier (4).

4. Dispositif de mélange d'électrolyte de la revendication 1, dans lequel le passage de la plaque de guidage (100) est divisé par une barre de guidage (400) s'étendant dans une direction longitudinale sur une surface de la plaque de guidage à un endroit situé entre des extrémités espacées faisant saillie à partir de surfaces de parois opposées de la partie réceptrice (210).

5. Dispositif de mélange d'électrolyte de la revendication 4, dans lequel le passage de la plaque de guidage (100) comprend :
un premier passage de guidage (510) prévu sur un côté de la barre de guidage (400) s'étendant de manière oblique, la largeur du premier passage de guidage s'élargissant au fur et à mesure que le premier passage de guidage (510) va vers le haut ; et
un deuxième passage de guidage (520) prévu de l'autre côté de la barre de guidage (400), une largeur du deuxième passage de guidage devenant étroite à mesure que le deuxième passage de guidage (520) va vers le haut.

6. Dispositif de mélange d'électrolyte de la revendication 1, comprenant en outre : un récipient de connexion (300) connecté entre des récipients de mélange opposés (200) et pourvu de multiples portions de connexion cloisonnées à la partie supérieure de la plaque de guidage (100).

7. Dispositif de mélange d'électrolyte de la revendication 1, la partie réceptrice (210) comprenant en outre : une paroi inclinée (230) s'étendant de manière inclinée vers le haut à partir d'une surface avant de la partie réceptrice (210) pour être espacée de surfaces de paroi opposées de la partie réceptrice (210), et fournissant la rainure d'entrée/sortie (240) entre la paroi inclinée (230) et les surfaces de paroi opposées de la partie réceptrice (210).
